# EUROPEAN PATENT SPECIFICATION

(11) **EP 4 241 564 B1**
(45) Date of publication and mention of the grant of the patent: **23.07.2025**
(21) Application number: 23182057.2
(22) Date of filing: 14.05.2021
(51) Int. Cl.: A21C 3/02

(54) **ROLLER APPARATUS COMPRISING A VARIABLE-WIDTH SPACER**
ROLLENVORRICHTUNG MIT ABSTANDSHALTER VARIABLER BREITE
APPAREIL À ROULEAUX COMPRENANT UN ESPACEUR À LARGEUR VARIABLE

(30) Priority: 14.05.2020 GB 202007161
(43) Date of publication of application: 13.09.2023
(62) Divisional of application: 21727395.2
(73) Proprietor: Frito-Lay Trading Company GmbH, 3011 Berne (CH)
(72) Inventor: TIBOS, Stacie, 3011 Berne (CH); OUELLETTE, Ed, Corinth, 76208 (US)
(74) Representative: McNamara, Kathryn

(56) References cited:
- EP-B1- 0 439 730
- EP-B2- 0 329 398
- CN-A- 102 452 170
- CN-A- 108 651 556
- CN-U- 206 776 628
- CN-U- 207 707 174
- JP-A- H10 184 664
- US-A- 3 684 332
- US-A- 3 883 283
- US-A- 5 498 148
- US-A- 5 498 433
- US-A- 5 674 543

## Description

### Field of the Invention

The invention relates to a roller assembly for producing compressed sheet material. The invention especially concerns such an assembly for producing sheet food materials.

### Background and Prior Art

Roller assemblies are often used in the process industries to produce sheet materials or a desired thickness from a starting material comprising a plastic or elastic material. In the food industries such materials would include pasta doughs and doughs for the manufacture of essentially flat products such as savoury snack and biscuits.

These roller assemblies comprise a pair of rollers arranged to define a gap between them, through which the material to be compressed is passed. Multiple sets of such roller assemblies may be employed in sequence to progressively compress a product into a sheet of desired thickness.

Despite the seemingly simple operation of such assemblies many considerations need to be taken into account for safe, precise, and practical operation.

JPH10184664A discloses roll bending devices forming sheets.

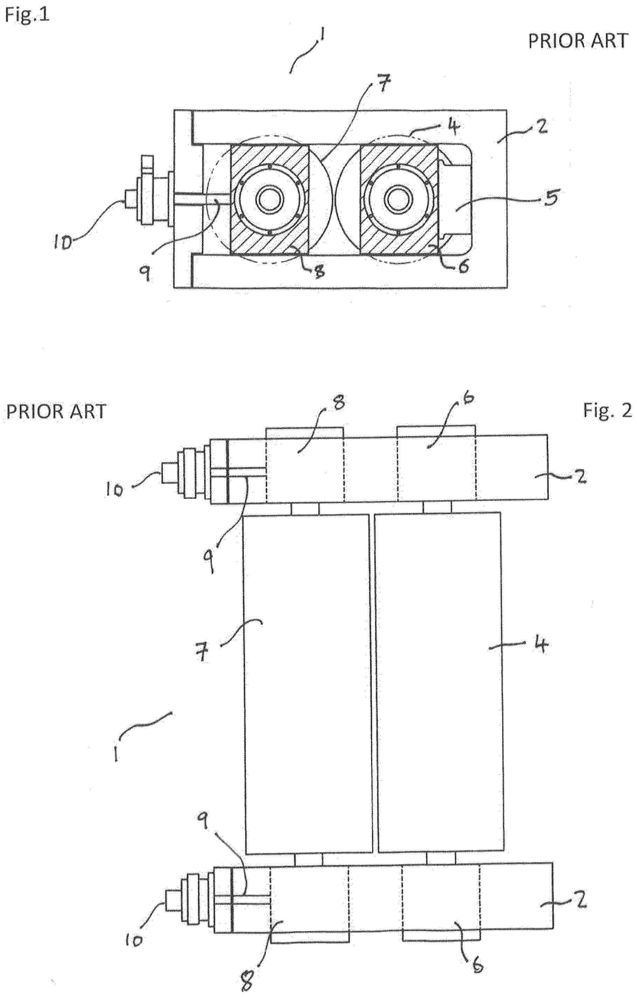

Figure 1 illustrates a side elevation view of a known roller assembly, generally indicated by 1, and referred to herein as a "screw jack assembly". The assembly 1 comprises a roller support frame 2 and a yoke 3. Mounted in the frame in a fixed position is a first roller 4, separated from the end of the frame by a spacer 5, abutting the bearing housing 6 of the first roller. Also mounted within the frame 2 is a second roller 7. This roller 7 is mounted for sliding movement in the frame 2, and its bearing housing 8 is connected to a threaded screw 9 passing through the yoke 3 and to a jack screw 10 which allows the second roller 7 to be moved towards, and away from the first roller to adjust the gap between the faces of each roller.

Figure 2 illustrates, in schematic plan view, the assembly of Figure 1 to more clearly illustrate the relation of parts. Like elements already described are correspondingly numbered. It can be seen that a frame 2 and its associated adjustment components are provided at each end of the shafts of each roller.

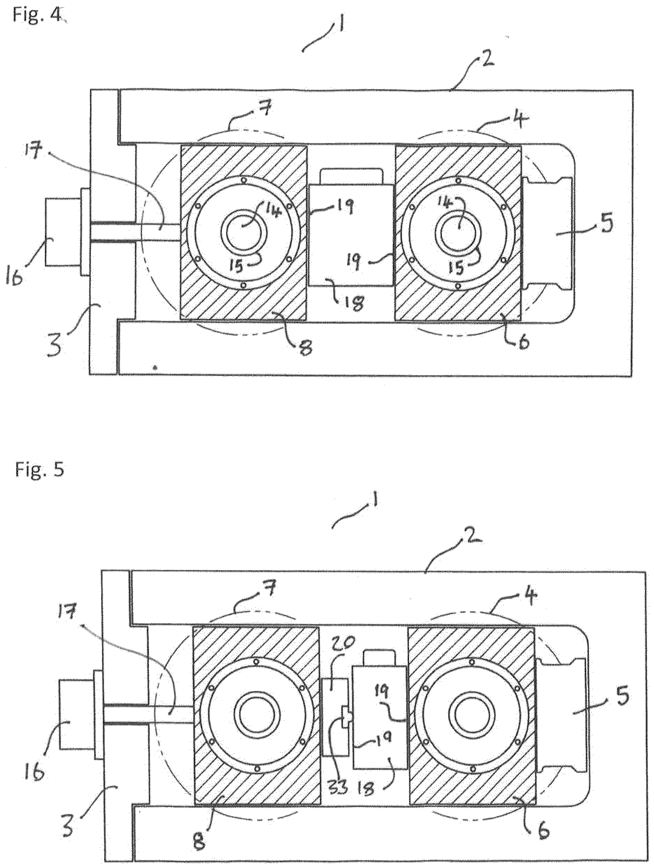

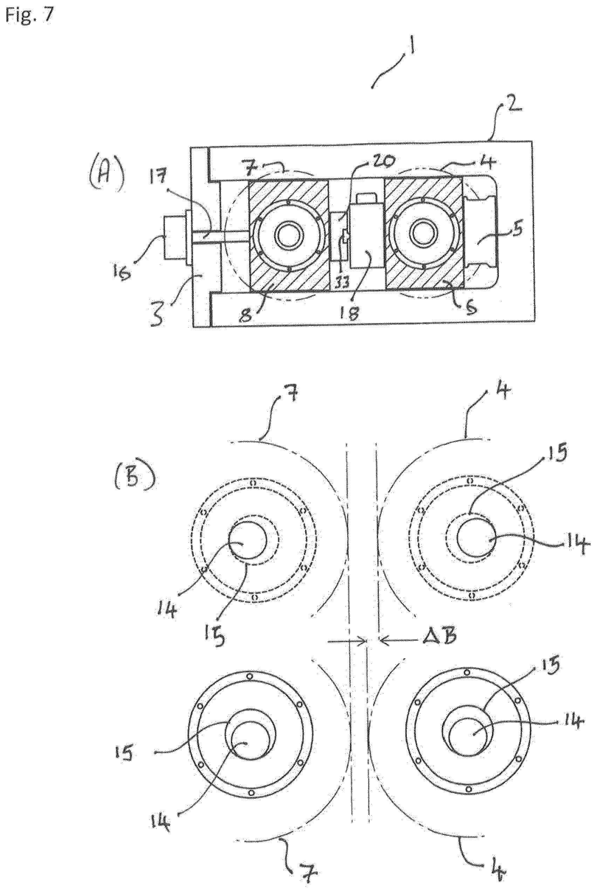

For many products, the required gap between the rollers is of a similar magnitude to the dimensional changes that components of the assembly might experience under changing operating loads, or changing temperatures. These dimensional changes will be described for the prior art roller assembly described above. The deformations and bearing tolerances illustrated in Figures 4, and 7 are exaggerated, for clarity.

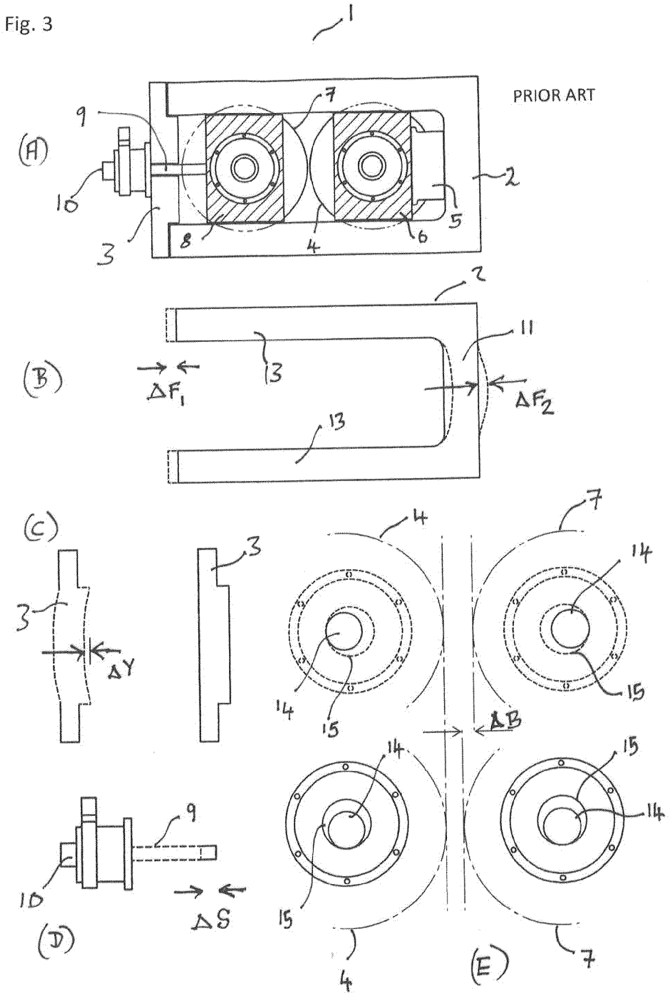

Figure 3A illustrates, in schematic elevation view, the screw jack roller assembly 1 already described in relation to Figure 1. Like elements already described are correspondingly numbered. Figures 3B-3E illustrate various elements of the assembly, to show the dimensional changes that might be experienced under changing operational loads or temperatures. Note that Figures 3D and 3E are shown at an enlarged scale, for clarity.

In use, when product is being compressed by the rollers, the product exerts a force on the rollers, tending to push them apart. This force can be quite considerable, reaching perhaps several hundred kN/m for some types of dough processing. This force is transmitted to the various components of the system with varying effects. Figure 3B illustrates the frame 2 of the assembly. Under product load conditions, the legs 13 of the frame 1 will be under tension, leading to a change in length of ΔF₁ (illustrated by the dotted line). So, when the product load is removed, e.g. if the feed is stopped, the rollers will move together by a distance of ΔF₁. Likewise, there can be a deformation of the base 11 of the frame when under load, indicated by ΔF₂. So, when the product load is removed, the rollers can move together by a further ΔF₂. Additionally, the length of the legs 13 of the frame is also affected by thermal expansion. When running, and under product load, the frame typically equilibrates at a higher temperature than ambient, leading to an additional increase in the length of the legs of ΔT. So, when temperatures fall, the rollers move together by an additional ΔT due to thermal contraction.

Figure 3C illustrates the yoke 3 of the assembly under product load conditions (dotted) and no-load conditions (solid line). Under product load, compression of the threaded screw 9 connected to the yoke 3 via the screw driver motor 10 will case the yoke to deform in a domed fashion as illustrated by the dotted line depiction. The deformation leads to a dimensional change of ΔY. When the product load is removed, the yoke 3 can relax back to its unstressed shape, illustrated by the solid line depiction. So, when the product load is removed, the rollers will move together by an additional distance of ΔY.

Figure 3D illustrates the threaded screw 9 and screw driver 10 in its under-product-load configuration (dotted line). The compressive force applied to the threaded screw leads to a reduction in its length of ΔS. So, when the product load is removed, the rollers will move together by an additional distance of ΔS.

Finally, Figure 3E illustrates, schematically the two rollers 4, 7 when under product load conditions (dotted lines) and when the product load is removed (solid lines). The rollers are typically mounted on rolling element bearings which are assembled with a specified clearance between the inner and outer races. The tolerance is exaggerated, of course, for clarity. When under product load, the shafts will be pushed apart by the force of the product by a distance equal to the bearing internal clearance, this distance being denoted ΔB. When the product load is removed, the roller shafts are free to move within their bearings (e.g. under gravity) and could move the rollers together by as much as ΔB.

Thus, for this type of roller assembly, the potential change in gap ΔG when the product load is removed, and the assembly cools is given by ΔG = ΔF₁ + ΔF₂ + ΔT + ΔY + ΔS + ΔB.

When the required operational gap between the rollers is small, e.g. to produce a typical thickness of a snack product of e.g. 0.4mm, the magnitude of ΔG is such that the rollers can contact each other when product load is removed. This can cause damage to the rollers, leads to production downtime, and can potentially be hazardous.

It is an object of the present invention to propose an alternative roller assembly in which the risk of rollers touching when product load is removed is significantly reduced, or even eliminated.

### Summary of the Invention

Accordingly, the invention provides a roller assembly for producing a compressed sheet material, said assembly comprising: (a) a roller support frame; (b) a first roller mountable in a fixed position relative to said frame; (c) a second roller mountable to said frame for sliding displacement relative to said first roller; (d) an actuator mountable to said frame, and arranged to apply force to the shaft bearing of said second roller to urge said second roller towards said first roller; and (e) a variable width spacer located between the shaft bearings of the first and second rollers to limit the minimum separation between said first and second rollers. Preferably, said variable width spacer comprises: (a) two adjacent wedges in sliding contact with each other such that the combined width of said wedges changes as the wedges slide relative to each other; and (b) a spacer actuator arranged to reversibly slide said wedges relative to each other to vary the width of said spacer.

Alternatively, said variable width spacer comprises: (a) a cam; and (b) a spacer actuator arranged to reversibly rotate said cam to vary the width of said spacer.

In either case, it is preferred that said actuator comprises a hydraulic ram.

According to the present invention the roller assembly further comprises a load cell to measure and transmit the force exerted on said variable width spacer by said roller shaft bearings to a controller.

More preferably, the roller assembly further comprises a force sensor to measure and transmit the force exerted by said actuator on the shaft bearing of said second roller to a controller.

According to the present invention said controller is configured to calculate the force exerted on the rollers from compressing said sheet material by subtracting the load cell force from either a pre-set or measured actuator force.

The scope of the invention also includes apparatus for manufacturing a sheet food material comprising a roller assembly of the invention.

The scope of the invention also includes a method of manufacturing a sheet food material comprising the step of passing a food material through a roller assembly of the invention.

### Brief Description of the Figures

The invention will be described with reference to the accompanying drawings, in which:
Figures 1 and 2 illustrate a known roller assembly in elevation and plan view respectively;
Figure 3 illustrates the known roller assembly of Figures 1 and 2, the deformations experienced during operation, and movement of roller shafts in their bearings;
Figures 4 and 5 illustrate roller assemblies of the invention, in elevation view;
Figure 6 illustrates a roller assembly of the invention in elevation and plan view;
Figure 7 illustrates a roller assembly of the invention, in elevation view, and movement of roller shafts in their bearings; and
Figures 8 and 9 illustrate gap adjusters forming part of a roller assembly of the invention.

### Description of Preferred Embodiments

Figure 4 illustrates, in elevation view, an embodiment of roller assembly of the invention, generally indicated by 1. Like elements already described in relation to the above prior art devices are correspondingly numbered. Elements are illustrated in a slightly spaced-apart relationship for clarity.

The roller assembly 1 comprises a roller support frame 2 in which is mounted a first roller in a fixed position relative to the frame. In this embodiment, a spacer 5 is provided between the bearing housing 6 of the first roller and the inner surface of the frame 2 to allow coarse adjustment of the gap between the rollers.

A second roller 7 is mounted in the frame for sliding displacement relative to the first roller 4 so that the gap between the faces of the rollers 4, 7 may be adjusted. An actuator 16 is provided, mounted to a yoke 3 attached to the frame 2 to apply force to the shaft bearing of the second roller 7. In this embodiment, a hydraulic actuator (e.g. a hydraulic ram) is used to apply force via a push rod 17 that passes through a hole in the yoke 3 and bears on a surface of the bearing housing 8 of the second roller 7. The force is thereby transferred onto the shaft bearing 15. On commissioning the roller assembly for any particular purpose, the force exerted by the actuator is chosen to be greater than the force exerted on the rollers by the product, to ensure that the rollers do not move apart under force of the product. Typically, the force exerted by the actuator might be chosen to 5%, 10, or even 20% above the expected product force.

A variable width spacer 18 is located between the shaft bearings 15 of the first and second rollers. In this embodiment, the spacer 18 is mounted between the two bearing housings 6, 8, each opposite side 19 of the spacer 18 abutting its adjacent bearing housing. Alternative designs for such variable width spacer are discussed below, but in principle the spacer can be controlled (e.g. by a control signal) to vary the width between the opposite faces 19 of the spacer 18 to limit the minimum separation of the first 4 and second 7 rollers.'

If variation of the gap between the rollers 4, 7 is required in addition to that provided by the variable width spacer 18, a shim, or multiple shims (not illustrated) can be positioned between the spacer 18 and one or both of the bearing housings 6, 8. This might be required if, e.g. a different product thicknesses is required or renovation of the surface of a roller has been undertaken, resulting in a change of roller diameter.

Figure 5 illustrates, again in elevation view, a second embodiment of roller assembly of the invention, generally indicated by 1. Like elements already described in relation to other assemblies are correspondingly numbered, and again, elements are illustrated in a slightly spaced-apart relationship for clarity.

This embodiment is largely the same as that of Figure 4, and common elements will not be described unnecessarily. This embodiment has an additional feature in that a load cell is mounted between one of the faces 19 of the variable width spacer 18 and its adjacent bearing housing 8. This can measure the force required to keep the roller bearing tight against the spacer 18, which will vary depending on the presence and physical properties of product being compressed in the gap between the faces of the rollers. The force exerted by the product on the rollers is given by the load cell reading minus the hydraulic force applied to the second bearing housing 8.

A signal can therefore be transmitted from the load cell to a controller for monitoring and control purposes. For example, it could be used to control the moisture content or temperature of the product (e.g. a dough) entering the roller assembly, to maintain a desired product force for a given gap width. Alternatively, it could trigger an alert to process operators if the calculated product force varies outside a predetermined range. The product load can either be calculated from the load cell reading minus a known, pre-set hydraulic force, or by subtracting the load cell force from a measured hydraulic force.

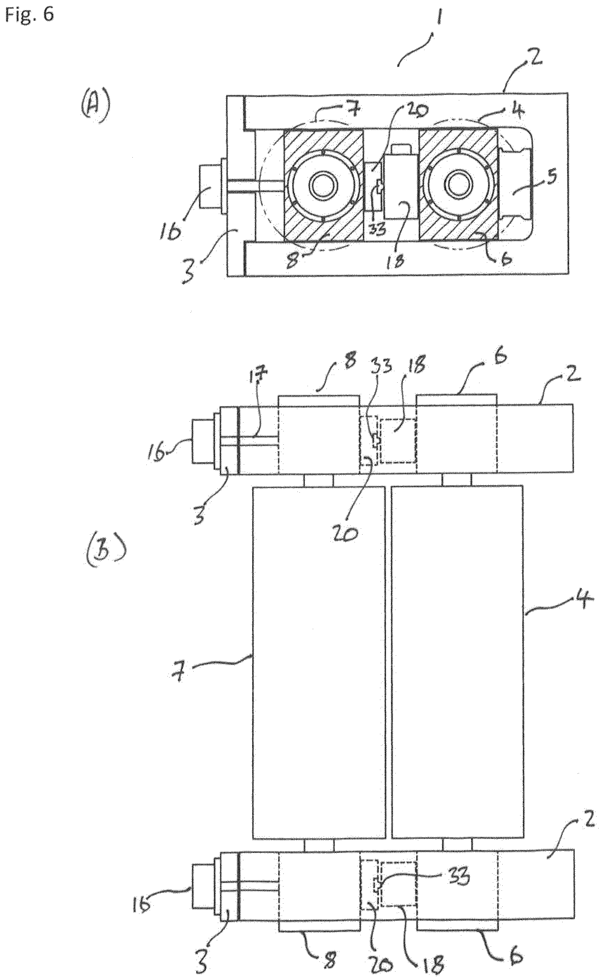

Figure 6 illustrates the embodiment of Figure 5 in elevation (6A) and plan (6B) view, to further clarify the arrangement of parts. Like elements are again correspondingly numbered. It can be seen in Figure 6B that each end of the rollers 4, 7 has the assembly illustrated in Figure 6A.

Figure 7 illustrates the effect of product loading and thermal expansion on the various elements of the assembly of Figure 6, in a way analogous to Figure 3. Again, like elements are numbered correspondingly.

Any change in the length of the legs 13 of the frame 2 due to temperature change or contraction when the tensile load reduces when the product load is removed is compensated for by the force applied by the push rod 17; additionally, as the variable width spacer (and in this embodiment, the load cell) are located between the two bearing housings 6, 8, any change in length cannot in any case cause the rollers to move together. The same is true for any deformation of the yoke. The only change in roller separation upon release of the product load can be the movement of the roller shafts 14 in their bearings 15, with a magnitude of ΔB. The greatest possible change in gap ΔG when the product load is removed, and the assembly cools is therefore given by ΔG = ΔB, using the same nomenclature as above.

It can be seen therefore, that the risk of rollers touching when a product load is removed is greatly reduced. If the required product gap is less than the AG, then the risk is removed altogether.

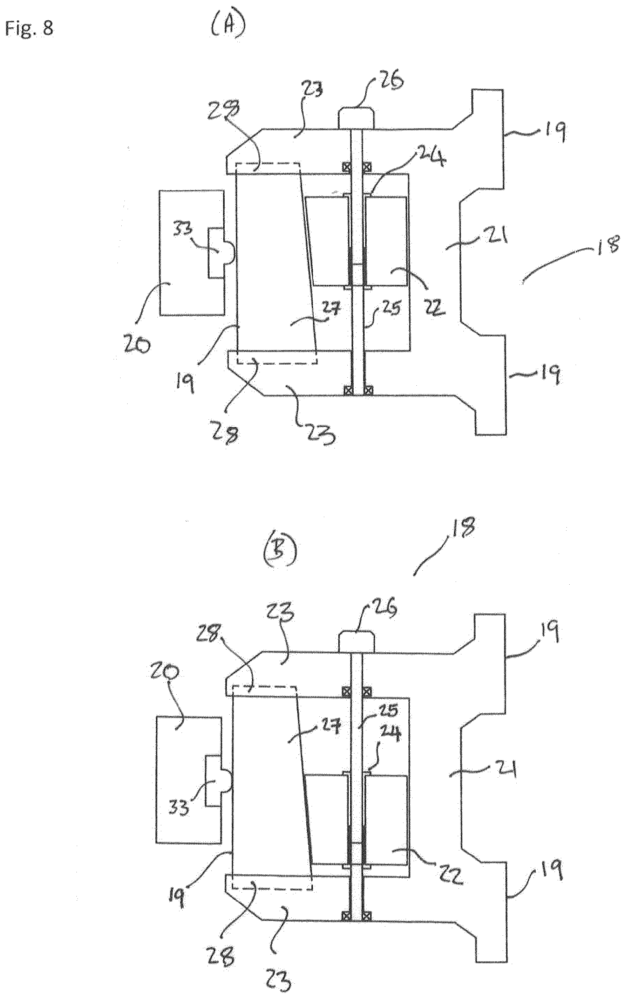

Figure 8 illustrates an embodiment of a variable width spacer for use in the invention, generally indicated by 18, in abutment with a load cell 33 supported by a load cell mount 20. The load cell is preferably provided with a load button, such as a hemispherical protrusion to reduce or eliminate errors that might be caused by misalignment. The illustration is partly schematic, for the purpose of illustrating its operation, and engineering details of common workshop practice such as, slide bearings, O-rings etc. are omitted for clarity.

The variable width spacer 18 comprises a mounting block 21 that supports the various components. A first wedge 22 is located between two arms 23 of the mounting block 21. The first wedge 22 is provided with a hole therethrough, containing a threaded bushing 24. A threaded rod 25 is rotatable by a servo gearhead 26 to cause the first wedge 22 to be moved up and down between the two arms 23.

A second wedge 27 is mounted for sliding displacement within a keyway 28 in each of the arms 23. The angled faces of the two wedges 22, 27 are placed in sliding abutment.

The slopes of the two angled faces are conveniently the same, to enable the axis of the threaded rod 25 to be perpendicular to the axis of the keyway 28. Choice of an appropriate slope is a balance between the amount of adjustment provided by the spacer, and the balance of forces normal to and parallel to the plane of abutment of the two wedges 22, 27. A large slope provides a greater range of adjustment but leads to more force parallel to the plane of abutment with a risk that frictional forces between the wedges might be overcome, leading to unwanted relative movement of wedges. A smaller slope reduces this risk, and provides finer control, but over a smaller range. This may be mitigated by use of shims between the spacer 18 and one of the bearings 6, 8 as described above. The inventors have found that a slope of between 1:10 and 1:20 provides a useful balance, but a consideration of transmitted forces and materials of construction could lead other choices in different circumstances.

In this way, when the servo gearhead 26 rotates the threaded rod 25 located in the bushing 24, the first wedge 22 slides relative to the first wedge and the geometry of the wedges causes the overall width of the gap adjuster to change. Figure 8B shows the adjuster 18 with the first wedge 22 moved downwards, causing the second wedge 27 to move outwards. In this embodiment the arms 23 extend past the leftmost outer face 19 of the variable width spacer 18 but the operative portion of the load cell 33 and its mount 20 fits between the two arms 23 so that the effective width of the gap adjuster is the distance between the two faces 19.

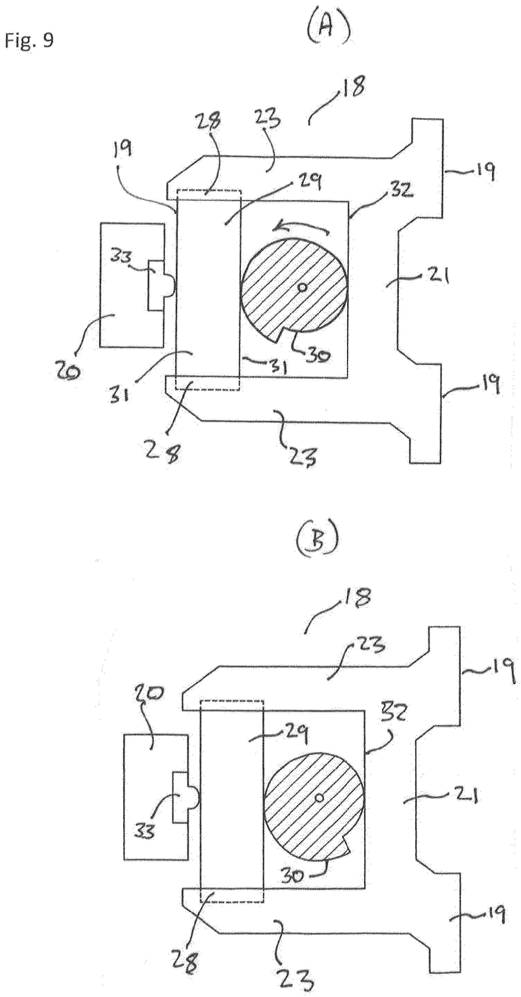

Figure 9 illustrates in the same way as Figure 8 an alternative variable width spacer, generally indicated by 18, and again in abutment with a load cell 33. Elements in common with the embodiment of Figure 8 are correspondingly numbered, and will not be described further. In this embodiment, the sliding wedges are replaced by the combination of a sliding block 29 located in a keyway in each of the arms 23 of the mounting block 21, and a rotatable cam 30 that sits between an inwardly-facing surface 31 of the sliding block 29 and an opposing inner face 32 of the mounting block 21. Rotation of the cam by e.g. a servo driven gearhead (not illustrated) causes a corresponding movement of the sliding block 29 within the keyways 28, thereby changing the operation width of the variable width spacer 18. Figure 9B shows the arrangement of Figure 9A after the cam has been turned in the direction indicated by the arrow, causing the sliding block 28 to retract within the mounting block 21, thereby decreasing the width between the outer operational faces 19 of the variable width spacer 18.

## Claims

1. A roller assembly (1) for producing a compressed sheet dough material, said assembly (1) comprising:
(a) a roller support frame (2);
(b) a first roller (4) mountable in a fixed position relative to said frame (2);
(c) a second roller (7) mountable to said frame (2) for sliding displacement relative to said first roller (4);
(d) an actuator (16) mountable to said frame (2), and arranged to apply force to the shaft bearing of said second roller (7) to urge said second roller (7) towards said first roller (4); and
(e) a variable width spacer (18) comprising a cam (30) and a spacer actuator arranged to reversibly rotate said cam (30) to vary the width of said spacer (18), located between the shaft bearings of the first and second rollers (4, 7) to limit the minimum separation between said first and second rollers (4, 7),
(f) a load cell (33) to measure and transmit the force exerted on said variable width spacer by said roller shaft bearings to a controller,
**characterised in that** the controller is configured to calculate the force exerted on the rollers from compressing said sheet dough material by subtracting the load cell force from either a pre-set or measured actuator force.

2. The roller assembly (1) of Claim 1 wherein said actuator (16) comprises a hydraulic ram.

3. The roller assembly (1) of any preceding Claim further comprising a force sensor to measure and transmit the force exerted by said actuator (16) on the shaft bearing of said second roller (7) to the controller.

4. Apparatus for manufacturing a sheet food dough material comprising a roller assembly (1) of any preceding claim.

5. A method of manufacturing a sheet food dough material comprising the step of passing a food dough material through a roller assembly (1) of any of claims 1 to 3.

## Patentansprüche

1. Rollenanordnung (1) zum Herstellen eines verdichteten Teigbandmaterials, wobei die Anordnung (1) Folgendes umfasst:
(a) einen Rollenstützrahmen (2);
(b) eine erste Rolle (4), die in einer festen Position relativ zum Rahmen (2) montierbar ist;
(c) eine zweite Rolle (7), die für eine gleitende Verschiebung relativ zur ersten Rolle (4) am Rahmen (2) montierbar ist;
(d) einen Aktuator (16), der am Rahmen (2) montierbar und angeordnet ist, auf das Wellenlager der zweiten Rolle (7) eine Kraft auszuüben, um die zweite Rolle (7) zur ersten Rolle (4) zu drängen; und
(e) einen Abstandhalter (18) variabler Breite, der einen Nocken (30) und einen Abstandhalteraktuator umfasst, der angeordnet ist, den Nocken (30) umkehrbar zu drehen, um die Breite des Abstandhalters (18) zu variieren, der sich zwischen den Wellenlagern der ersten und der zweiten Rolle (4, 7) befindet, um die minimale Trennung zwischen der ersten und der zweiten Rolle (4, 7) zu begrenzen,
(f) eine Wägezelle (33) zum Messen der von den Rollenwellenlagern auf den Abstandhalter variabler Breite ausgeübten Kraft und Übertragen derselben zu einer Steuerung,
**dadurch gekennzeichnet, dass** die Steuerung dazu ausgelegt ist, die durch das Verdichten des Teigbandmaterials auf die Rollen ausgeübte Kraft durch Subtrahieren der Wägezellenkraft entweder von einer voreingestellten oder einer gemessenen Aktuatorkraft zu berechnen.

2. Rollenanordnung (1) nach Anspruch 1, wobei der Aktuator (16) einen Hydraulikzylinder umfasst.

3. Rollenanordnung (1) nach einem der vorhergehenden Ansprüche, die ferner einen Kraftsensor zum Messen der vom Aktuator (16) auf das Wellenlager der zweiten Rolle (7) ausgeübten Kraft und Übertragen derselben zur Steuerung umfasst.

4. Einrichtung zum Herstellen eines Lebensmittelteigbandmaterials, die eine Rollenanordnung (1) nach einem der vorhergehenden Ansprüche umfasst.

5. Verfahren zum Herstellen eines Lebensmittelteigbandmaterials, das den Schritt des Führens eines Teigbandmaterials durch eine Rollenanordnung (1) nach einem der Ansprüche 1 bis 3 umfasst.

## Revendications

1. Ensemble de rouleaux (1) pour produire une pâte en feuille comprimée, ledit ensemble (1) comprenant :
(a) un cadre de support de rouleaux (2) ;
(b) un premier rouleau (4) pouvant être monté dans une position fixe par rapport audit cadre (2) ;
(c) un second rouleau (7) pouvant être monté sur ledit cadre (2) pour le déplacement coulissant par rapport audit premier rouleau (4) ;
(d) un actionneur (16) pouvant être monté sur ledit cadre (2) et agencé pour appliquer une force sur le palier de l'arbre dudit second rouleau (7) afin de pousser ledit second rouleau (7) vers ledit premier rouleau (4) ; et
(e) un espaceur à largeur variable (18) comprenant une came (30) et un actionneur d'espaceur agencé pour faire tourner ladite came (30) en sens inverse afin de modifier la largeur dudit espaceur (18), positionné entre les paliers d'arbre des premier et second rouleaux (4, 7) pour limiter la séparation minimum entre lesdits premier et second rouleaux (4, 7),
(f) une cellule de charge (33) pour mesurer et transmettre la force exercée sur ledit espaceur à largeur variable par lesdits paliers d'arbre de rouleau à un organe de commande,
**caractérisé en ce que** l'organe de commande est configuré pour calculer la force exercée sur les rouleaux lors de la compression de ladite pâte en feuille comprimée en soustrayant la force de la cellule de charge d'une force d'actionneur prédéfinie ou mesurée.

2. Ensemble de rouleaux (1) selon la revendication 1, dans lequel ledit actionneur (16) comprend un vérin hydraulique.

3. Ensemble de rouleaux (1) selon l'une quelconque des revendications précédentes, comprenant en outre un capteur de force pour mesurer et transmettre la force exercée par ledit actionneur (16) sur le palier de l'arbre dudit second rouleau (7) à l'organe de commande.

4. Appareil pour fabriquer une pâte alimentaire en feuille comprenant un ensemble de rouleaux (1) selon l'une quelconque des revendications précédentes.

5. Procédé pour fabriquer une pâte alimentaire en feuille comprenant l'étape consistant à faire passer une pâte alimentaire à travers un ensemble de rouleaux (1) selon l'une quelconque des revendications 1 à 3.
